# EUROPÄISCHE PATENTANMELDUNG

(11) **EP 0 725 233 A2**
(43) Veröffentlichungstag der Anmeldung: **07.08.1996**
(21) Anmeldenummer: 96101162.4
(22) Anmeldetag: 27.01.1996
(51) Int. Cl.: F16H 59/04

(54) **Fahrschalter für Lastschaltgetriebe**

(30) Priorität: 01.02.1995 DE 19503050
(71) Anmelder: ZF FRIEDRICHSHAFEN Aktiengesellschaft, D-88038 Friedrichshafen (DE)
(72) Erfinder: Härdtle, Wilhelm, D-88677 Markdorf (DE)

(57) **Zusammenfassung**

Ein Fahrschalter für Lastschaltgetriebe, insbesondere für Baumaschinengetriebe, das mehrere Vor- und Rückwärtsgänge aufweist, ist mit einem in einem Gehäuse (1) verstellbar gelagerten Schalthebel (3) versehen. Der Schalthebel (3) ist als Tippschalter ausgebildet, wobei drei Schaltgassen, nämlich für vorwärts, neutral und rückwärts, und in jeder Fahrtrichtung eine federzentrierte Mittelstellung (13) vorgesehen sind, von der aus jeweils nur eine Stufe hoch- oder zurückschaltbar ist. Nach einem Schaltvorgang kehrt der Schalthebel (3) in die jeweilige Mittelstellung (13) zurück.

## Beschreibung

Die Erfindung betrifft einen Fahrschalter für Lastschaltgetriebe nach der im Oberbegriff von Anspruch 1 näher definierten Art.

Lastschaltgetriebe, insbesondere für Baumaschinengetriebe, die häufig Wendegetriebe oder Planetengetriebe aufweisen, besitzen mehrere Vorwärts- und Rückwärtsgänge. Gleiches gilt auch für Kranfahrzeuge, Baustellenfahrzeuge, Grader und ähnliche Fahrzeuge. Dabei sind im allgemeinen sechs und mehr Vorwärtsgänge und mindestens zwei bis drei Rückwärtsgänge vorgesehen. Dies bedeutet, daß ein Fahrschalter für die Schaltung dieser Gänge relativ groß und teuer ist. Probleme bereitet dabei auch die Abdichtung des Schalthebels, da z. B. ein Faltenbalg häufig aufgrund der großen Wege nicht mehr möglich ist.

Ein weiteres Problem bei bekannten Getrieben besteht auch darin, daß häufig "überschaltet" wird, d. h. daß ein oder mehrere Gänge übersprungen werden. Nachteilig ist weiterhin, daß jeweils für ein spezifisches Lastschaltgetriebe ein dazugehöriger Fahrschalter erforderlich ist, was dazu führt, daß eine Vielzahl unterschiedlicher Fahrschalter hergestellt und auf Vorrat gehalten werden müssen.

Aus der Praxis sind auch bereits Fahrschalter bekannt, wobei der Schalthebel nur in einer Ebene, d. h. nur in einer Gasse bewegt wird und wobei ein gesonderter Drehknopf für Vorwärts- und Rückwärtsfahrt vorgesehen ist.

Nachteilig dabei ist jedoch, daß ein derartiger Fahrschalter relativ aufwendig ist, und daß zum Schalten zwei Schaltelemente, nämlich der Schalthebel und der Drehknopf, zu bedienen sind.

Der vorliegenden Erfindung liegt daher die Aufgabe zugrunde einen Fahrschalter zu schaffen, der für verschiedene Lastschaltgetriebe mit unterschiedlicher Steuerung und beliebiger Ganganzahl bei einfacher Bedienung und geringer Baugröße geeignet ist.

Erfindungsgemäß wird diese Aufgabe durch die im kennzeichnenden Teil von Anspruch 1 genannten Merkmale gelöst.

Mit dem erfindungsgmäßen Fahrschalter können die verschiedensten Lastschaltgetriebe mit beliebigen Steuerungen und Ganganzahlen geschaltet werden. Durch die Verwendung eines Tippschalters in der angegebenen Weise werden lange Schaltwege vermieden. Nach jedem Schaltvorgang kehrt der Fahrthebel in eine federzentrierte Mittelstellung zurück. Ein weiterer Vorteil dieser erfindungsgemäßen Lösung liegt darin, daß ein "Überschalten" von Gängen damit ausgeschlossen wird, sofern keine besonderen Maßnahmen hierfür vorgesehen werden.

Der erfindungsgemäße Fahrschalter ist einfach und robust im Aufbau und einfach in seiner Bedienung. Dadurch, daß nur kurze Schaltwege vorhanden sind, ist auch eine einfache und wasserdichte Abdichtung, z. B. über einen Faltenbalg, möglich.

Vorteilhafte Weiterbildungen der Erfindung ergeben sich aus den Unteransprüchen und aus dem nachfolgend anhand der Zeichnung prinzipmäßig beschriebenen Ausführungsbeispiel.

Es zeigen:
- Fig. 1: eine Prinzipdarstellung eines Fahrschalters mit einer Z-Kulisse;
- Fig. 2: eine Seitenansicht aus Pfeilrichtung A des Fahrschalters nach der Fig. 1 und
- Fig. 3: eine Prinzipdarstellung eines anderen Ausführungsbeispieles mit einem Fahrthebel mit Drehdurchführung.

Ein Fahrschalter weist ein Gehäuse 1 auf, in dem eine Z-Kulisse 2 für den Weg eines Schalthebels 3 vorgesehen ist. In nicht näher dargestellter Weise ist der Schalthebel 3 über eine Steuerleitung 4 mit einem Elektronikmodul 5 verbunden. Von dem Elektronikmodul 5, das mit einer Programmierung des Getriebecodes, mit Sicherheitsfunktionen, Plausibilitätsüberwachungen und dergleichen versehen ist, wird elektrisch, elektrohydraulisch oder auf ähnliche Weise über eine Verbindungsleitung 6 ein Lastschaltgetriebe 7 bezüglich Gangwechsel gesteuert. Über eine Informationsleitung 8 ist das Elektronikmodul 5 mit einem Display 9 zur Anzeige des gewählten Ganges und gegebenenfalls für weitere Informationen am Armaturenbrett verbunden.

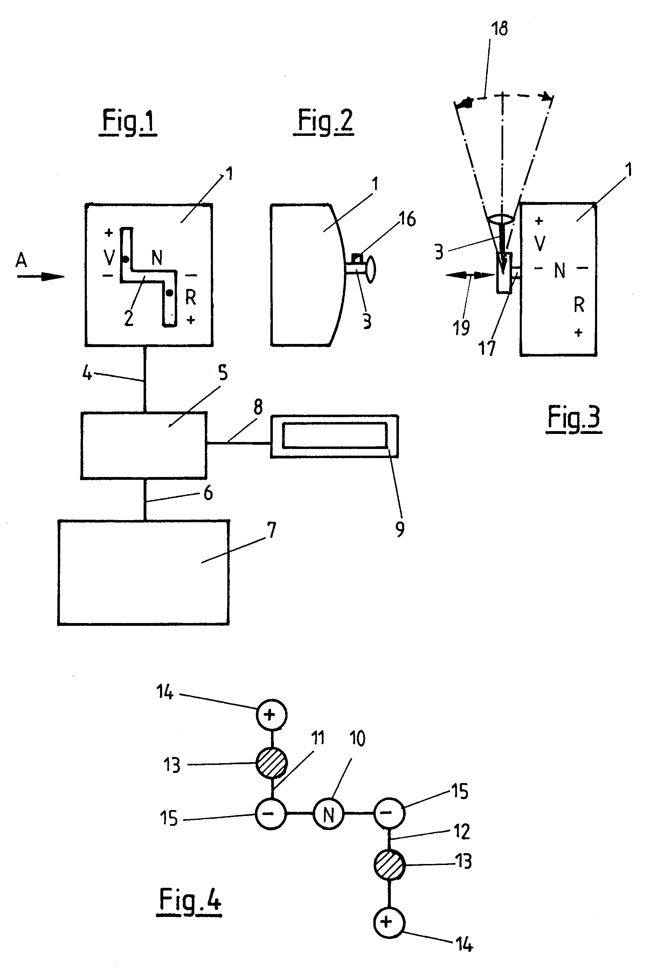

Aus der Fig. 4 ist das in der Fig. 1 nur prinzipmäßig dargestellte Schaltbild für den Schalthebel 3 besser ersichtlich. Es sind drei Schaltgassen bzw. drei Ebenen vorhanden, nämlich eine Neutralgasse 10, eine Vorwärtsgasse 11 und eine Rückwärtsgasse 12. Sowohl in der Vorwärtsgasse 11 als auch der Rückwärtsgasse 12 ist eine federzentrierte Mittelstellung 13 vorhanden. Die Mittelstellung 13 befindet sich jeweils zwischen einer Plus-Richtung 14 für ein Hochschalten um einen Gang und einer Minus-Richtung 15 für ein Zurückschalten um einen Gang.

Der Schalthebel 3 ist als sogenannter Tippschalter ausgebildet, der nach einem Antippen und damit nach einem Hochschalten oder Zurückschalten um einen Gang beim Loslassen selbsttätig in die federzentrierte Mittelstellung 13 aufgrund einer entsprechenden Federvorspannung (nicht dargestellt) zurückkehrt. Aus der Neutralgasse 10 wird der Schalthebel 3 z. B. bei einer gewünschten Vorwärtsfahrt durch eine entsprechende Schaltbewegung in die Vorwärtsgasse 11 gebracht und dort in die federzentrierte Mittelstellung 13 gezogen, von wo aus dann der Schaltvorgang vorgenommen wird.

Im Fahrbetrieb wird jedesmal beim Antippen des Schalthebels 3 z. B. in Plus-Richtung 14 jeweils um einen Gang hochgeschaltet. Umgekehrt wird bei einem Antippen in Minus-Richtung 15 jeweils um einen Gang zurückgeschaltet. Dies gilt auch für die Rückwärtsgasse 12. Dies bedeutet, daß ein "Überschalten" von einzelnen Gängen nicht möglich ist. Soll dies doch ermöglicht werden, wenn es z. B. durch die Motordrehzahl möglich wäre, so kann für diesen Zweck ein Funktionsglied in Form eines Funktionsknopfes 16 vorgesehen sein, der sich z. B. an dem Schalthebel 3 befindet. Bei dessen Betätigung können nach einer Prüfung der Motordrehzahl und eines maximal möglichen Gangsprunges gegebenenfalls einzelne Gänge übersprungen werden.

In dem Elektronikmodul 5 sind neben getriebespezifischen Codes auch verschiedene Schaltprogramme hinterlegbar. So kann z. B. vorgesehen sein, daß auf diese Weise ein direktes Einlegen des ersten Ganges bei Wahl der Vorwärtsstellung oder jeweils das nur einmalige Erreichen dieses Schaltvorganges nach Betätigen des Schalthebels 3 in Hochschaltrichtung ermöglicht wird.

In der Fig. 3 ist ein Ausführungsbeispiel dargestellt mit einem Schalthebel 3, der auf einer Welle 17 mit einer Drehdurchführung in das Gehäuse 1 angeordnet ist. Aufgrund dieser Drehdurchführung ist eine sehr einfache Abdichtung möglich.

Durch eine Schwenkbewegung in Pfeilrichtung 18 oder eine axiale Bewegung in Pfeilrichtung 19 sind dabei die drei gewünschten Schaltgassen, nämlich Neutral, Vorwärts und Rückwärts, anwählbar. Der Schaltvorgang für die einzelnen Gangstufen in Vorwärts- oder Rückwärtsrichtung erfolgt durch ein Verdrehen des Schalthebels 3 mit der horizontalen Welle 17. Die Steuerverbindung mit dem Elektronikmodul 5, mit dem Lastschaltgetriebe 7 und dem Display 9 kann auf gleiche Weise wie bei dem Ausführungsbeispiel nach den Figuren 1 und 2 erfolgen.

### Bezugszeichen

- 1: Gehäuse
- 2: Z-Kulisse
- 3: Schalthebel
- 4: Steuerleitung
- 5: Elektronikmodul
- 6: Verbindungsleitung
- 7: Lastschaltgetriebe
- 8: Informationsleitung
- 9: Display
- 10: Neutralgasse
- 11: Vorwärtsgasse
- 12: Rückwärtsgasse
- 13: Mittelstellung
- 14: Plus-Richtung
- 15: Minus-Richtung
- 16: Funktionsschaltglied
- 17: Welle
- 18: Pfeilrichtung
- 19: Pfeilrichtung

## Patentansprüche

1. Fahrschalter für Lastschaltgetriebe, insbesondere für Baumaschinengetriebe, das mehrere Vor- und Rückwärtsgänge aufweist, ist mit einem in einem Gehäuse verstellbar gelagerten Schalthebel versehen, dadurch **gekennzeichnet,** daß der Schalthebel (3) als Tippschalter ausgebildet ist, wobei drei Schaltgassen, nämlich für vorwärts, neutral und rückwärts, und in jeder Fahrtrichtung eine federzentrierte Mittelstellung (13) vorgesehen sind, von der aus jeweils nur eine Stufe hoch- oder zurückschaltbar ist, und wobei nach einem Schaltvorgang der Schalthebel (3) in die jeweilige Mittelstellung (13) zurückkehrt.

2. Fahrschalter nach Anspruch 1, dadurch **gekennzeichnet,** daß der Schalthebel (3) über ein Elektronikmodul (5) mit dem Lastschaltgetriebe (7) verbunden ist, wobei das Elektronikmodul (5) getriebespezifische Code- und Plausibilitätsfunktionen enthält.

3. Fahrschalter nach Anspruch 1 oder 2, dadurch **gekennzeichnet,** daß für die Mittelstellungen (13) Rückstellfedern vorgesehen sind.

4. Fahrschalter nach einem der Ansprüche 1 bis 3, dadurch **gekennzeichnet,** daß für die Bewegung des Schalthebels (3) eine Z-Kulisse vorgesehen ist.

5. Fahrschalter nach einem der Ansprüche 1 bis 3, dadurch **gekennzeichnet,** daß für die Bewegung des Schalthebels (3) für die Wahl der Schaltgassen eine Schwenk- oder Axialbewegung des auf einer Welle (17) angeordneten Schalthebels (3) und für die Schaltvorgänge in Vorwärts- oder Rückwärtsrichtung eine Verdrehung des Schalthebels (3) mit der Welle (17) vorgesehen ist.

6. Fahrschalter nach einem der Ansprüche 1 bis 5, dadurch **gekennzeichnet,** daß ein Funktionsschaltglied (16) vorgesehen ist, durch das bei dessen Betätigung Gänge überspringbar sind.
